# FASCICULE DE BREVET EUROPEEN

(11) **EP 0 396 433 B1**
(45) Date de publication et mention de la délivrance du brevet: **22.09.1993**
(21) Numéro de dépôt: 90400477.7
(22) Date de dépôt: 21.02.1990
(51) Int. Cl.: F15B 13/044, B62D 6/02, B62D 5/06

(54) **Modulateur et circuit de direction assistée comprenant un tel modulateur**
Fluidsteuervorrichtung und ein diese umfassender Servolenkungskreis
Flow control device and power steering circuit including this device

(30) Priorité: 31.03.1989 FR 8904330
(43) Date de publication de la demande: 07.11.1990
(73) Titulaire: ALLIEDSIGNAL EUROPE SERVICES TECHNIQUES, 93700 Drancy (FR)
(72) Inventeur: Kervagoret, Gilbert, Bendix Europe, F-93700 Drancy (FR)
(74) Mandataire: Bentz, Jean-Paul

(56) Documents cités:
- EP-A- 0 202 154
- DE-A- 3 514 406
- FR-A- 2 146 032
- US-A- 4 561 521
- ENERGIE FLUIDE. no. 118, avril 1980, PARIS FR pages 51 - 53; "Valves proportionnelles"

## Description

L'invention concerne un modulateur prévu pour dériver une quantité de fluide sous haute pression du circuit d'alimentation en fluide d'un moteur hydraulique. Elle concerne également un circuit de direction assistée pour véhicule automobile dont l'assistance est fonction de la vitesse du véhicule, ce circuit mettant en oeuvre un tel modulateur.

On connaît du brevet US-A-4 561 521 un circuit de direction assistée du type précité dans lequel est utilisé un modulateur pour dériver, à grande vitesse du véhicule, une partie du fluide d'assistance sous pression vers le réservoir de fluide à basse pression, de manière à limiter l'assistance à grande vitesse. Ce modulateur est constitué par un simple piston commandé électriquement venant obturer ou non un orifice d'évacuation du fluide vers le réservoir de fluide à basse pression.

Un tel modulateur nécessite un dispositif d'actionnement important car l'une des faces du piston reçoit en permanence le fluide sous pression.

En outre, on sait que dans une direction assistée, il est souhaitable de maintenir constant le débit de fluide à vitesse donnée du véhicule pour conserver les caractéristiques d'assistance. Or le modulateur décrit dans le document précité n'assure aucune fonction de régulation de débit.

Le document EP-A-0 202 154 décrit un modulateur à tiroir assurant la fonction de régulation de débit conforme au préambule de la première revendication. Toutefois, ce tiroir est soumis à la pression du fluide dérivé, ce qui nécessite un dispositif d'actionnement important et/ou une limitation du diamètre du tiroir.

La présente invention obvie à ces inconvénients. Selon un premier aspect, l'invention concerne un modulateur prévu pour dériver une quantité déterminée de fluide sous haute pression du circuit d'alimentation d'un moteur hydraulique, comprenant un corps, un tiroir de modulateur mobile axialement dans l'alésage sous l'action d'un organe de commande, un orifice d'entrée et une lumière de sortie du fluide débouchant dans l'alésage ; le tiroir présente des première et seconde portées sensiblement au diamètre de l'alésage et séparées par une section rétrécie en regard de laquelle débouche l'orifice d'entrée, la seconde portée contrôlant la lumière de sortie ; le tiroir détermine une première chambre disposée entre les première et seconde portées et des deuxième et troisième chambres disposées de part et d'autre du tiroir. Selon l'invention, les deuxième et troisième chambres communiquent entre elles ; la lumière de sortie communique avec une chambre intermédiaire dans la paroi latérale de laquelle débouche l'orifice de sortie du modulateur et en ce que cette chambre intermédiare abrite un tiroir de régulateur contrôlant l'orifice de sortie et se déplaçant à l'encontre d'un ressort sous l'effet de la différence entre la pression régnant dans la première chambre et celle régnant dans la chambre intermédiaire. De préférence, la seconde portée comporte une section de transition tronconique.

Selon un mode de réalisation, les deuxième et troisième chambres sont reliées à un réservoir de fluide à basse pression, auquel peut également être relié un orifice d'échappement contrôle par la première portée ; un deuxième orifice d'entrée peut favorablement déboucher dans l'alésage entre le premier orifice d'entrée et l'orifice d'échappement.

Le deuxième orifice d'entrée peut comporter une restriction.

Selon un deuxième aspect, l'invention concerne un circuit de direction assistée pour véhicule automobile dont l'assistance est fonction de la vitesse du véhicule, comprenant une source de fluide sous haute pression, une valve contrôlant l'admission de fluide sous haute pression dans un dispositif d'assistance, un détecteur de la vitesse du véhicule, une unité de commande de l'assistance, et un modulateur prévu pour dériver une quantité de fluide sous haute pression du circuit d'alimentation du dispositif d'assistance.

Selon l'invention, le modulateur est conforme au modulateur qui a été décrit ci-dessus ; en outre, l'orifice de sortie est relié à un réservoir de fluide à basse pression, et l'organe de commande du tiroir de modulateur est constitué par un moteur électrique commandé par l'unité de commande de l'assistance. De préférence, lorsque la valve est une valve à double distribution, l'orifice de sortie du modulateur est relié au réservoir par l'intermédiaire de la seconde distribution dont est pourvue la valve.

De façon favorable, le modulateur peut comprendre en outre un détecteur de la position du tiroir de modulateur dont le signal de sortie est appliqué à l'unité de commande de l'assistance pour contrôler une défaillance du modulateur.

L'invention sera mieux comprise et d'autres buts, avantages et caractéristiques de celle-ci apparaîtront plus clairement à la lecture de la description qui suit, donnée à titre non limitatif, d'un mode de réalisation préféré, et à laquelle sont jointes deux planches de dossiers sur lesquels :
- la Figure 1 représente schématiquement en coupe un modulateur conforme à la présente invention,
- la Figure 2 représente en coupe un mode de réalisation pratique du modulateur de la Figure 1, et
- la Figure 3 illustre schématiquement un circuit de direction assistée conforme à l'invention.

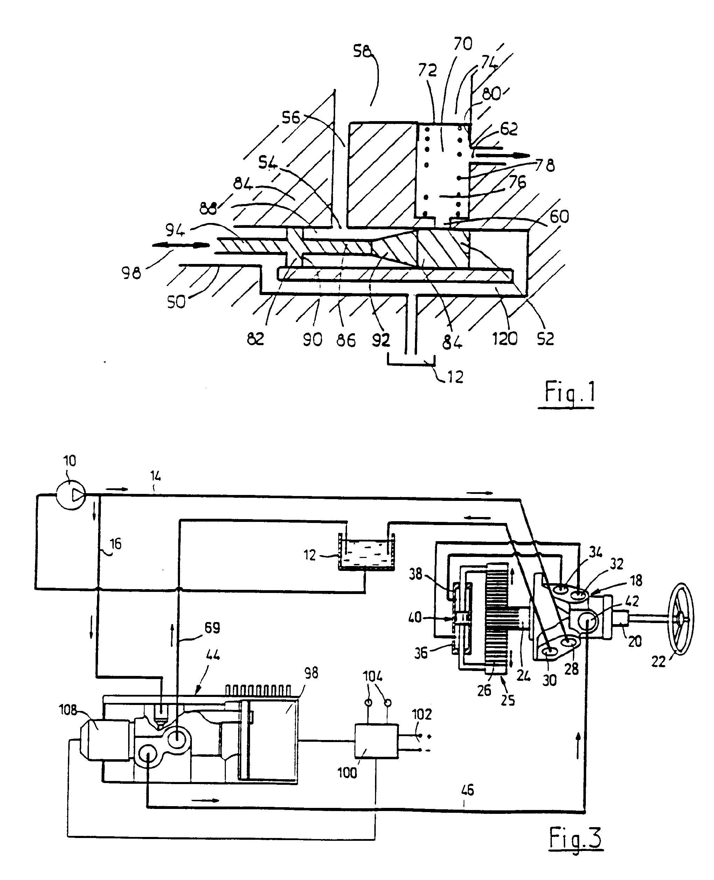

En référence maintenant à la Figure 1, le modulateur comporte un corps 48 percé d'un alésage 50 dans lequel coulisse un tiroir 52.

Un orifice d'entrée 58 est relié au conduit dont on veut dériver du fluide sous pression, tandis que l'orifice 62 constitue la sortie du modulateur. Un passage d'entrée 56 relie l'orifice d'entrée 58 à l'alésage 50 par une lumière d'entrée 54.

L'orifice de sortie 62 débouche dans la paroi latérale d'une chambre intermédiaire 70 abritant un tiroir de régulateur de débit 72. La chambre intermédiaire 70 est divisée en deux parties par ce tiroir 72 : une partie supérieure 74 en communication avec l'orifice d'entrée 58 et une partie inférieure 76 en communication avec l'alésage 50 par l'intermédiaire de la lumière 60. La jupe latérale 80 du tiroir est destinée à obturer ou non l'orifice de sortie 62 en fonction de la différence des pressions régnant dans les parties 74 et 76 de la chambre intermédiaire, en fonction de la raideur du ressort 78 qui sollicite le tiroir vers la partie supérieure.

Le tiroir 52 de modulateur comprend deux portées 82, 84 de mêmes diamètres, coulissant dans l'alésage 50 et séparées par une section rétrécie 86 définissant ainsi une première chambre 88.

La portée 82 située au voisinage de la lumière d'entrée 54 est séparée de la section rétrécie 86 par un épaulement radial 90 sensiblement plan, tandis que l'autre portée 84 située au voisinage de la lumière de sortie 60 est séparée de la section rétrécie 86 par une section de transition tronconique 92.

Le tiroir se termine par une tige d'actionnement 94 solidaire d'un organe 98 d'entraînement, destiné à déplacer axialement le tiroir 52 dans l'alésage 50 comme il sera vu ci-après.

De part et d'autre des deux portées, sont ainsi déterminées deux chambres qui communiquent entre elles par un conduit 120. Les pressions exercées étant ainsi équilibrées, l'organe d'entraînement 98 du tiroir de modulateur n'a pas besoin d'exercer un effort important pour déplacer le tiroir 52.

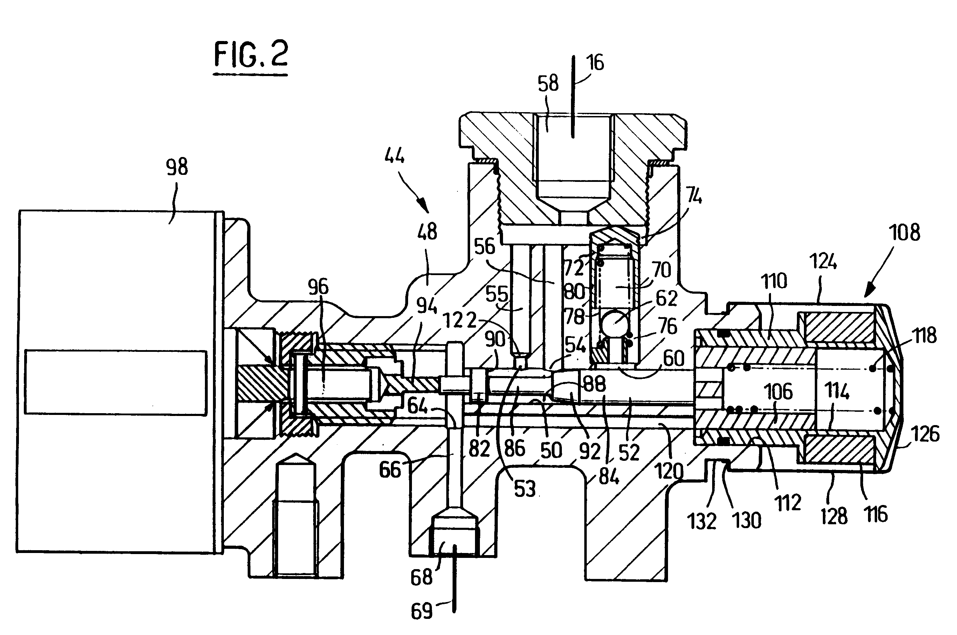

La Figure 2 représente un mode de réalisation pratique du modulateur de la Figure 1. Bien entendu, les références utilisées restent identiques. On constate ici qu'une seconde lumière d'entrée 53, ouverte également vers l'alésage 50, à gauche de la première lumière d'entrée 54 lorsqu'on considère la figure, est reliée par un second passage 55 muni d'un étranglement 122 à l'orifice d'entrée 58.

Une lumière d'évacuation 64, décalée axialement vers la gauche par rapport à la seconde lumière d'entrée 53, est reliée par un passage d'évacuation 66 à un orifice d'évacuation 68, relié au réservoir de fluide à basse pression 12 (Figure 3) par un conduit 69.

L'organe d'entraînement qui est un moteur électrique 98 associé à un dispositif du type vis-écrou 96 est raccordé à une unité de commande 100 (Figure 3), elle-même raccordée à une source de courant 102 et à des capteurs de vitesse 104, par exemple associés aux roues du véhicule ou à un organe lié à ces dernières.

Au-delà de la portée 84, le tiroir du modulateur coopère avec un noyau 106 d'un détecteur de position 108, du type inductif dans ce mode de réalisation.

Le détecteur comprend une chemise 110 sensiblement cylindrique fixée dans un logement 112 du corps 48 de modulateur et définissant un passage intérieur 114 dans lequel se déplace le noyau 106, et une bobine de détecteur 116 fixe entourant la chemise 110.

Le noyau est maintenu au contact de l'extrémité du tiroir 52 par un ressort 118.

La bobine est également raccordée à l'unité de commande 100.

Le circuit de direction assistée illustré Figure 3 comprend une pompe 10 puisant du liquide dans un réservoir 12 basse pression, et le refoulant dans des conduites 14, 16.

Une première conduite 14 dessert une valve rotative de direction assistée 18 à double distribution dans l'exemple décrit ici.

On rappellera ici sommairement que la valve rotative 18 comporte un organe mécanique d'entrée 20 lié au volant 22 du véhicule et un organe mécanique de sortie 24 lié au mécanisme 25 de direction des roues partiellement représenté Figure 3.

Dans l'exemple illustré, l'organe mécanique de sortie 24 consiste en un pignon engrenant avec une crémaillère 26 du mécanisme de direction, et entraînant cette dernière en va-et-vient selon la rotation imprimée au volant 22.

Les organes mécaniques d'entrée 20 et de sortie 24 de la valve 18 commandent des éléments de valve montés en rotation dans le corps de valve.

Ces éléments de valve, non représentés, commandent une première distribution entre l'orifice d'entrée 28 auquel aboutit la conduite haute pression 14, un orifice d'échappement 30 relié au réservoir basse pression 12 et deux orifices de commande droite et gauche 32, 34 reliés respectivement aux deux chambres droite et gauche 36, 38 d'un vérin 40 à double effet monté parallèle à la crémaillère 26.

Lorsque les organes mécaniques d'entrée 20 et de sortie 24 de la valve occupent l'un par rapport à l'autre une position neutre, les orifices de commande 32, 34 sont à des pressions égales, de même que les chambres de vérin 36, 38, de sorte que le vérin 40 n'exerce aucune force d'assistance sur la crémaillère 26.

Par contre, tout décalage angulaire relatif de l'un des organes mécaniques d'entrée 20 et de sortie 24 par rapport à l'autre entraîne un déséquilibre des pressions aux orifices de commande 32, 34 et, par conséquent, dans les chambres de vérin, de sorte que le vérin 40 exerce une force d'assistance sur la crémaillère 26.

Les éléments de valve commandent d'autre part une seconde distribution entre un orifice d'admission 42 relié également au refoulement de la pompe 10 via la seconde conduite 16, un modulateur 44 et une conduite 46, et l'orifice de retour 30 relié au réservoir 12.

Le rôle de cette seconde distribution est d'établir un passage de fuite permanent depuis l'orifice d'admission 42 vers l'orifice de retour 30, et par conséquent de réduire, au repos, le débit du fluide admis par la conduite principale 14 vers la première distribution et donc de réduire l'assistance, et d'étrangler progressivement ce passage de fuite lorsque les organes mécaniques d'entrée 20 et de sortie 24 sont décalés angulairement l'un par rapport à l'autre de part et d'autre d'une position neutre, c'est-à-dire lors d'actions sur la direction, et par conséquent augmenter la pression du fluide admis vers la première distribution et donc augmenter l'assistance.

Le modulateur 44 est interposé sur la conduite 16 de dérivation vers la seconde distribution.

Le circuit et le modulateur fonctionnent de la manière suivante :

A vitesse nulle ou faible, l'unité de commande 100 pilote le moteur 98 afin d'amener le tiroir 52 dans la position illustrée Figure 2. La portée 82 est située sensiblement entre la lumière d'entrée 54 et la lumière d'évacuation 64, tandis que l'autre portée 84 obture la lumière de sortie 60.

Il n'y a donc aucun écoulement de fluide dans le modulateur 44 et, par conséquent, dans la seconde distribution de la valve de servodirection 18.

La totalité du débit fourni par la pompe 10 traverse donc la première distribution de la valve 18 et les actions sur le volant 22 se traduisent par une forte assistance sur le mécanisme de direction 26 par l'intermédiaire du vérin 40.

Le détecteur 108 détecte la position du tiroir 52 et l'unité de commande 100 vérifie si cette position correspond à celle qui découle du signal envoyé par l'unité de commande 100 au moteur 98.

Lorsque la vitesse croît, l'unité de commande 100 déclenche le fonctionnement du moteur 98 afin de déplacer progressivement le tiroir 52 vers la droite Figure 2.

La portée 82 du tiroir 52 se déplace en rapprochement des lumières d'entrée 53 et 54, mais tout en maintenant interrompue la communication entre les lumières d'entrée 53 et 54 et la lumière d'évacuation 64.

L'autre portée 84 se déplace vers la droite, jusqu'à ce que la zone de transition tronconique 92 vienne face à la lumière de sortie 60, ce qui établit une communication entre la lumière d'entrée 54 et la lumière de sortie 60 via la première chambre 88 entourant la section centrale rétrécie 86 du noyau, cette communication étant plus ou moins étranglée selon la position axiale de la section tronconique 92 vis-à-vis de la lumière de sortie 60.

Un courant de fluide s'établit donc depuis la lumière d'entrée 54 jusqu'à la lumière de sortie 60, puis de celle-ci jusqu'à l'orifice de sortie 62 via la partie inférieure 76 de la chambre intermédiaire. Le débit de ce courant de fluide est fixé par le régulateur en fonction de la position du tiroir 52 dans l'alésage 50, indépendamment des pressions amont et aval s'établissant dans les conduits 16 et 46.

Le débit refoulé par la pompe 10 est donc progressivement dérivé par le modulateur 44 vers la seconde distribution de la valve 18, ce qui réduit d'autant le débit admis vers la première distribution.

Comme il a déjà été décrit, l'assistance commandée par la première distribution diminue, tandis que, lors d'actions plus prononcées sur le mécanisme de direction, les étranglements provoqués dans la seconde distribution se traduisent par une augmentation de pression dans la première distribution et donc une augmentation corrélative de l'assistance.

Grâce au modulateur 44, le débit fourni à la seconde distribution de la valve 18 reste constant, pour une position donnée du tiroir 52, quel que soit l'étranglement des orifices internes de cette seconde distribution.

Ici également, le détecteur 108 détecte la position du tiroir 52 et l'unité de commande 100 vérifie qu'elle correspond à celle résultant du signal de commande envoyé au moteur 98.

Lorsque la vitesse dépasse un seuil déterminé, l'unité de commande 100 imprime, via le moteur 98, un déplacement axial supplémentaire du tiroir 52 vers la droite jusque dans une position où la portée 82 dépasse la seconde lumière d'entrée 53, ce qui établit donc une communication entre la lumière d'entrée 53 et la lumière d'évacuation 64.

Une majeure partie du fluide débité par la pompe 10 est par conséquent directement dérivé vers le réservoir 12, de sorte que seule une petite partie de ce débit est admise à la valve de direction assistée 18 afin d'assurer une assistance minimale.

Une restriction calibrée 122 interposée dans le second passage d'entrée 55 permet de prédéterminer la proportion du débit ainsi dérivé directement vers le réservoir 12.

Lorsque la vitesse décroît, l'unité de commande 100 déclenche le déplacement du tiroir 52 en direction opposée et l'on observe les mêmes phases de fonctionnement que précédemment décrites, dans l'ordre inverse.

Si l'unité de commande 100 détermine que le signal de position du tiroir 52 délivré par la bobine 116 ne correspond pas à la position assignée par le moteur 98, elle commande alors impérativement ce dernier afin de déplacer le tiroir 52 vers la droite jusque dans la position d'assistance minimale, et ce jusqu'à réparation de l'organe défectueux qui a provoqué la panne.

Le mode de réalisation du détecteur de position 108, sous la forme d'une chemise 110 simplement emboîtée sur le corps 48 de modulateur, abritant le noyau 106 de détecteur et entourée par la bobine 116 de détecteur, est particulièrement simple et économique.

Son maintien sur le corps 48 est assuré à l'aide d'un étrier élastique 124 en forme de U, dont la base 126 est appliquée à l'extrémité de la chemise 110 et dont les ailes 128 se terminent par des ergots 130 encliquetés dans des dépressions 132 du corps de modulateur.

Par ailleurs, l'étanchéité du modulateur 44 est assurée par de simples joints statiques.

En effet, il n'est point besoin de prévoir de joints d'étanchéité sur le tiroir 52.

De plus, la pression régnant dans les deux chambres à chaque extrémité de l'alésage 50 du tiroir est celle du réservoir, ce qui ne nécessite que des joints relativement simples.

## Revendications

1. Modulateur prévu pour dériver une quantité déterminée de fluide sous haute pression du circuit d'alimentation d'un moteur hydraulique, comprenant un corps (48), un alésage (50) dans ledit corps, un tiroir (52) de modulateur mobile axialement dans ledit alésage sous l'action d'un organe de commande (98), un orifice d'entrée (58) et une lumière de sortie (60) du fluide débouchant dans ledit alésage (50), ledit tiroir (52) présentant des première et seconde portées (82, 84) sensiblement au diamètre de l'alésage et séparées par une section rétrécie (86) en regard de laquelle débouche ledit orifice d'entrée (58), ladite seconde portée (84) contrôlant ladite lumière de sortie (60), ledit tiroir (52) déterminant une première chambre disposée entre lesdites première et seconde portées (82, 84) et des deuxième et troisième chambres disposées de part et d'autre dudit tiroir (52), caractérisé en ce que les deuxième et troisième chambres communiquent entre elles, et que ladite lumière de sortie (60) communique avec une chambre intermédiaire (70) dans la paroi latérale de laquelle débouche l'orifice de sortie (62) dudit modulateur et en ce que cette chambre intermédiare abrite un tiroir de régulateur (72) contrôlant ledit orifice de sortie (62) et se déplaçant à l'encontre d'un ressort (78) sous l'effet de la différence entre la pression régnant dans ladite première chambre et celle régnant dans ladite chambre intermédiaire.

2. Modulateur selon la revendication 1, caractérisé en ce que ladite seconde portée comporte une section de transition tronconique (92).

3. Modulateur selon la revendication 1 ou 2 caractérisé en ce que lesdites deuxième et troisième chambres sont reliées à un réservoir de fluide à basse pression.

4. Modulateur selon la revendication 3 caractérisé en ce qu'un orifice d'échappement (64) contrôlé par ladite première portée (82) est également relié audit réservoir de fluide à basse pression et qu'un deuxième orifice d'entrée (53) débouche dans ledit alésage (50) entre le premier orifice d'entrée (58) et ledit orifice d'échappement (64).

5. Modulateur selon la revendication 4 caractérisé en ce que ledit deuxième orifice d'entrée (53) comporte une restriction.

6. Circuit de direction assistée pour véhicule automobile dont l'assistance est fonction de la vitesse dudit véhicule, comprenant une source (10) de fluide sous haute pression dans un dispositif d'assistance (40), un détecteur (104) de la vitesse du véhicule, une unité de commande (100) de ladite assistance, et un modulateur (44) prévu pour dériver une quantité de fluide sous haute pression du circuit d'alimentation dudit dispositif d'assistance (40), caractérisé en ce que ledit modulateur (44) est conforme à l'une quelconque des revendications précédentes, que ledit orifice de sortie (62) est relié à un réservoir de fluide à basse pression (12), que ledit organe de commande (98) dudit tiroir (52) de modulateur est constitué par un moteur électrique commandé par ladite unité de commande (100) de ladite assistance.

7. Circuit selon la revendication 6 caractérisé en ce que ledit orifice de sortie (62) est relié audit réservoir (12) par l'intermédiaire d'une seconde distribution dont est pourvue ladite valve (18).

8. Circuit selon la revendication 7 caractérisé en ce que ledit modulateur (44) comprend en outre un détecteur (108) de la position du tiroir (52) de modulateur dont le signal de sortie est appliqué à ladite unité de commande (100) de ladite assistance.

## Patentansprüche

1. Modulator zum Ableiten einer bestimmten Menge unter Hochdruck stehenden Fluids aus dem Versorgungskreis eines Hydraulikmotors, mit einem Körper (48), einer Bohrung (50) in dem Körper, einem unter der Wirkung eines Steuerorgans (98) in der Bohrung axial beweglichen Schieber (52), einer Eingangsöffnung (58) und einem Auslaß (60) für das in die Bohrung (50) mündende Fluid, wobei der Schieber (52) eine erste und eine zweite Auflagefläche (82, 84) im wesentlichen mit dem Durchmesser der Bohrung aufweist, die durch einen verengten Abschnitt (86) getrennt sind, gegenüber welchem die Eingangsöffnung (58) mündet, wobei die zweite Auflagefläche (84) den Auslaß (60) kontrolliert und wobei der Schieber (52) eine erste, zwischen der ersten und der zweiten Auflagefläche (82, 84) angeordnete Kammer sowie eine zweite und eine dritte Kammer bestimmt, die beiderseits des Schiebers (52) angeordnet sind, dadurch gekennzeichnet, daß die erste und die dritte Kammer miteinander in Verbindung stehen, und daß der Auslaß (60) mit einer Zwischenkammer (70) in Verbindung steht, in deren Seitenwand die Ausgangsöffnung (62) des Modulators mündet, sowie daß diese Zwischenkammer einen Regelschieber (72) aufnimmt, der die Ausgangsöffnung (62) kontrolliert und sich unter der Wirkung der Differenz zwischen dem in der ersten und dem in der zweiten Kammer herrschenden Druck gegen eine Feder (78) verschiebt.

2. Modulator nach Anspruch 1, dadurch gekennzeichnet, daß die zweite Auflagefläche einen kegelstumpfförmigen Übergangsabschnitt (92) aufweist.

3. Modulator nach Anspruch 1 oder 2, dadurch gekennzeichnet, daß die zweite und die dritte Kammer mit einem Behälter mit unter Niederdruck stehendem Fluid verbunden sind.

4. Modulator nach Anspruch 3, dadurch gekennzeichnet, daß eine durch die erste Auflagefläche (82) kontrollierte Auslaßöffnung (64) auch mit dem unter Niederdruck stehenden Fluidbehälter verbunden ist und daß eine zweite Eingangsöffnung (53) zwischen der ersten Eingangsöffnung (58) und der Auslaßöffnung (64) in die Bohrung (50) mündet.

5. Modulator nach Anspruch 4, dadurch gekennzeichnet, daß die zweite Eingangsöffnung (53) eine Drosselstelle aufweist.

6. Servolenkkreis für ein Kraftfahrzeug, dessen Lenkhilfe von der Geschwindigkeit des Fahrzeugs abhängt, mit einer Quelle (10) mit unter Hochdruck stehendem Fluid in einer Hilfsvorrichtung (40), einem Detektor (104) für die Geschwindigkeit des Fahrzeugs, einer Steuereinheit (100) für die Lenkhilfe sowie einem Modulator (44), der zum Ableiten einer Menge an unter Druck stehendem Fluid aus dem Versorgungskreis der Hilfsvorrichtung (40) vorgesehen ist, dadurch gekennzeichnet, daß der Modulator (44) einem der vorhergehenden Ansprüche entspricht, daß die Ausgangsöffnung (62) mit einem Behälter (12) mit unter Niederdruck stehendem Fluid verbunden ist, und daß das Steuerorgan (98) des Modulatorschiebers (52) durch einen durch die Steuereinheit (100) der Lenkhilfe gesteuerten Elektromotor gebildet ist.

7. Kreis nach Anspruch 6, dadurch gekennzeichnet, daß die Ausgangsöffnung (62) über einen zweiten Anschluß, mit dem das Ventil (18) versehen ist, mit dem Behälter (12) verbunden ist.

8. Kreis nach Anspruch 7, dadurch gekennzeichnet, daß der Modulator (44) außerdem einen Detektor (108) für die Position des Modulatorschiebers (52) aufweist, dessen Ausgangssignal an die Steuereinheit (100) der Lenkhilfe angelegt wird.

## Claims

1. Modulator intended for diverting a specific quantity of fluid under high pressure from the supply circuit of a hydraulic motor, comprising a body (48), a bore (50) in the said body, a modulator slide (52) movable axially in the said bore under the action of a control member (98), an inlet orifice (58) and a fluid outlet port (60) opening into the said bore (50), the said slide (52) having first and second bearing surfaces (82, 84) substantially of the diameter of the bore and separated by means of a narrowed section (86), opposite which the said inlet orifice (58) opens out, the said second bearing surface (84) controlling the said outlet port (60), the said slide (52) defining a first chamber arranged between the said first and second bearing surfaces (82, 84) and second and third chambers arranged on either side of the said slide (52), characterized in that the second and third chambers communicate with one another, and in that the said outlet port (60) communicates with an intermediate chamber (70), in the side wall of which the outlet orifice (62) of the said modulator opens out and in that this intermediate chamber contains a regulator slide (72) controlling the said outlet orifice (62) and moving counter to a spring (78) under the effect of the difference between the pressure prevailing in the said first chamber and that prevailing in the said intermediate chamber.

2. Modulator according to Claim 1, characterized in that the said second bearing surface has a frustoconical transition section (92).

3. Modulator according to Claim 1 or 2, characterized in that the said second and third chambers are connected to a low-pressure fluid reservoir.

4. Modulator according to Claim 3, characterized in that an exhaust orifice (64) controlled by the said first bearing surface (82) is likewise connected to the said low-pressure fluid reservoir, and in that a second inlet orifice (53) opens into the said bore (50) between the first inlet orifice (58) and the said exhaust orifice (64).

5. Modulator according to Claim 4, characterized in that the said second inlet orifice (53) has a restriction.

6. Power-assisted steering circuit for a motor vehicle, the assistance of which is a function of the speed of the said vehicle, comprising a source (10) of fluid under high pressure in an assistance device (40), a detector (104) of the vehicle speed, a control unit (100) for the said assistance and a modulator (44) intended for diverting a quantity of fluid under high pressure from the supply circuit of the said assistance device (40), characterized in that the said modulator (44) conforms to any one of the preceding claims, in that the said outlet orifice (62) is connected to a low-pressure fluid reservoir (12), and in that the said control member (98) of the said modulator slide (52) consists of an electric motor controlled by the said control unit (100) of the said assistance.

7. Circuit according to Claim 6, characterized in that the said outlet orifice (62) is connected to the said reservoir (12) by means of a second distribution with which the said valve (18) is equipped.

8. Circuit according to Claim 7, characterized in that the said modulator (44) also possesses a detector (108) of the position of the modulator slide (52), the output signal of which is applied to the said control unit (100) of the said assistance.
